# FASCICULE DE BREVET EUROPEEN

(11) **EP 2 101 253 B1**
(45) Date de publication et mention de la délivrance du brevet: **24.10.2018**
(21) Numéro de dépôt: 09155048.3
(22) Date de dépôt: 12.03.2009
(51) Int. Cl.: G06F 3/0488, G06F 3/038

(54) **Système de classification de gestes**
Gestenklassifikationsvorrichtung
Gesture-classification device

(30) Priorité: 14.03.2008 FR 0851687
(43) Date de publication de la demande: 16.09.2009
(73) Titulaire: Orange, 75015 Paris (FR)
(72) Inventeur: Petit, Eric, 38400 St. Martin d'Heres (FR); Maldivi, Christophe, 38000 Grenoble (FR)
(74) Mandataire: Regimbeau

(56) Documents cités:
- US-A1- 2003 043 174
- US-A1- 2003 055 644
- US-A1- 2004 143 796
- US-A1- 2005 088 420
- RUBINE D: "SPECIFYING GESTURES BY EXAMPLE", COMPUTER GRAPHICS, ACM, US, vol. 25, no. 4, 1 July 1991 (1991-07-01), pages 329-337, XP000501386, ISSN: 0097-8930, DOI: 10.1145/127719.122753

## Description

La présente invention se situe dans le domaine des interactions gestuelles.

Les interactions gestuelles reposent sur l'interprétation des gestes effectués par un utilisateur sur une surface sensible au toucher ou dans une interface graphique. La surface ou l'interface graphique peut être celle d'une tablette mobile, d'un PDA (pour *Personal Digital Assitant* en anglais), d'un terminal mobile, d'un micro-ordinateur, etc.

Sur une surface, un geste peut être effectué avec un doigt ou un stylet. Dans une interface graphique, un geste peut être effectué par l'intermédiaire d'un périphérique de pointage tel qu'une souris ou un pavé tactile (pour *touchpad* en anglais).

Un geste correspond à une action physique continue. Un geste commence, par exemple, lorsque l'utilisateur touche une surface avec le doigt, se poursuit lorsque l'utilisateur fait glisser son doigt sur la surface et finit lorsque l'utilisateur lève le doigt. Pour un périphérique de pointage tel qu'une souris, le geste commence lorsque l'utilisateur appuie sur un bouton de la souris et finit lorsque ce bouton est relâché.

Un geste est défini par une trajectoire paramétrée dans le temps et dans l'espace cartésien (abscisse, ordonnée) ou éventuellement dans un espace plus grand incluant d'autres paramètres comme par exemple la pression ou l'angle du geste.

On distingue deux catégories de gestes :
- les gestes asynchrones,
- les gestes synchrones.

Dans le cas des gestes asynchrones, la trajectoire du geste est interprétée globalement, en tant que forme graphique, et détermine une commande à exécuter. Cette commande à exécuter correspond le plus souvent à un raccourci clavier, c'est-à-dire à une combinaison de touches qui une fois enfoncées lancent une fonction. Cette commande peut également correspondre à l'exécution d'un programme.

Par exemple, dans certaines applications utilisant Windows (marque déposée) comme système d'exploitation, il suffit de tracer un trait vers le haut pour copier, un trait vers le bas pour coller, un U de gauche à droite pour annuler une action, un U de droite à gauche pour rétablir une action, un W sur le bureau pour lancer Word (marque déposée), un N pour créer un nouveau document, un S pour sauvegarder, etc.

Les formes graphiques ainsi reconnues et associées à une commande appartiennent à un ensemble fini. Ces formes sont généralement complexes et souvent inspirées de caractères manuscrits.

L'exécution de la commande associée à la forme du geste n'est effectuée qu'à la fin du geste, une fois la forme reconnue, d'où la notion de geste asynchrone.

Un geste synchrone correspond à une action directe sur des objets situés sur une surface ou dans une interface graphique. Par action, on entend, par exemple, une sélection, un déplacement comme un "glisser-déposer" (pour *drag and drop* en anglais), une modification d'apparence comme un zoom, voire le dessin d'un objet. A titre d'exemples, on désigne par objet, une icône, un menu, un fichier, une page web, un contenu multimédia, etc. Ce type de geste fait généralement intervenir un périphérique de pointage.

Dans le cas du déplacement d'un objet comme un "glisser-déposer", l'action commence par une sélection de l'objet réalisée par un appui sur un bouton du périphérique de pointage. Puis, en maintenant l'appui sur le bouton du périphérique de pointage, l'action se poursuit par le déplacement de l'objet sur la surface ou dans l'interface graphique. L'action se termine lorsque le bouton du périphérique de pointage est relâché.

Le plus souvent, seule la position instantanée du périphérique de pointage est interprétée, en particulier le début et la fin du geste. La forme globale de la trajectoire n'est pas reconnue.

L'action sur l'objet est immédiatement visible, d'où la notion de geste synchrone.

Il est rare de disposer d'applications qui mettent en oeuvre des interactions gestuelles reposant à la fois sur des gestes asynchrones et des gestes synchrones.

Néanmoins, lorsque de telles applications existent, pour une même surface ou pour une même interface graphique, l'utilisateur doit agir pour marquer explicitement le changement de catégorie de geste, ce qui lui complique la tâche. Le plus souvent, cette action requiert le maintien en position enfoncée d'un bouton sur la surface ou sur le périphérique de pointage.

Dans la demande de brevet US2006055685, les auteurs tentent de résoudre ce problème en proposant un ensemble particulier de gestes asynchrones, c'est-à-dire des gestes correspondant à des commandes à exécuter. Ces gestes sont désignés par l'expression "*flick gestures*" dans le document en anglais.

Parmi les gestes asynchrones, cette solution ne retient que des gestes simples et faciles à reconnaître dans une interface graphique mettant en oeuvre un périphérique de pointage. En effet, au lieu d'avoir une forme spécifique complexe associée à une commande, chaque geste de l'ensemble des "*flick gestures*" est caractérisé par une forme rectiligne et une vitesse d'exécution élevée. Ainsi, la reconnaissance d'un tel geste et la distinction entre un tel geste et un geste synchrone reposent principalement sur un critère de vitesse. Par ailleurs, ce n'est plus la forme du geste qui détermine la commande associée à ce geste mais sa direction, cette dernière étant rectiligne. Il y a autant de commandes que de directions définies par le système.

Cette solution présente l'inconvénient de limiter le nombre de gestes asynchrones possibles et donc le nombre de commandes associées.

L'utilisation du critère de direction pour déterminer une commande est peu pratique pour un utilisateur en situation de mobilité du fait de l'orientation peu précise du terminal supposé tenu dans la main.

L'utilisation du critère de direction demande une attention visuelle plus forte de la part de l'utilisateur alors qu'un critère basé sur la forme est moins contraignant.

Par conséquent, malgré la solution proposée dans la demande de brevet US2006055685, il existe toujours le besoin de pourvoir combiner des gestes synchrones et des gestes asynchrones dans une même application, sans contrainte pour l'utilisateur et tout en conservant la richesse de représentation des gestes asynchrones.

Le document US2004/0143796 enseigne le fait de déterminer au cours de l'exécution d'un geste de commande symbolique par un utilisateur s'il s'agit d'un geste synchrone ou non, afin d'invoquer au plus vite la commande. Qu'il soit synchrone ou non, le geste est ensuite identifié par comparaison avec les caractéristiques spatiales de symboles préenregistrés.

Le document de Dean Rubine, intitulé « Specifying Gestures by Example », publié dans la revue « Computer Graphics », vol. 25, Numéro 4, en juillet 1991, décrit une méthode de reconnaissance statistique d'un geste de manipulation directe d'objets sur une interface, à partir de caractéristiques spatiales, telles qu'un angle initial du geste ou cinématiques, comme par exemple une vitesse maximale du geste.

Le document US2003055644 décrit un automate à états finis pour l'analyse de gestes et de commandes vocales.

Ainsi, la présente invention définie par la revendication 1 concerne, de manière générale, selon un premier aspect, un système de classification de gestes exécutés par un utilisateur sur une surface ou dans une interface graphique comportant un module de méta-classification qui analyse des caractéristiques cinématiques et spatiales d'un geste quelconque en cours d'exécution et affecte à ce geste une classe de gestes synchrones ou asynchrones.

Le système permet de classifier un geste quelconque, par conséquent, il permet l'exécution de tout geste par un utilisateur et est sans contrainte pour ce dernier. Le système permet à l'utilisateur d'exécuter des gestes synchrones et asynchrones sans que celui-ci ait à indiquer la nature du geste qu'il va exécuter.

L'invention concerne également un procédé comme défini dans la revendication 5, le procédé concernant de manière générale un procédé de classification de gestes exécutés par un utilisateur sur une surface ou dans une interface graphique comportant une étape de méta-classification comportant l'analyse de caractéristiques cinématiques et spatiales d'un geste quelconque en cours d'exécution et l'affectation à ce geste d'une classe de gestes synchrones ou asynchrones.

L'invention concerne aussi un produit programme d'ordinateur comportant des instructions de programme pour l'exécution du procédé de classification de gestes décrit précédemment.

L'invention concerne également un terminal comportant un système de classification de gestes tel que décrit ci-dessus.

L'invention sera mieux comprise à la lumière de la description qui suit d'un mode particulier de réalisation d'un système de classification de gestes selon l'invention, en référence aux dessins annexés pour lesquels :
- la figure 1 représente un exemple d'un système de classification de gestes selon l'invention,
- la figure 2 illustre un exemple détection d'un angle,
- la figure 3 illustre deux exemples de classification de gestes selon l'invention,
- la figure 4 représente un exemple de procédé de classification de gestes selon l'invention.

Le but du système de classification de gestes selon l'invention est de permettre à un utilisateur d'utiliser indifféremment des gestes asynchrones pour réaliser des commandes et des gestes synchrones pour manipuler des objets situés sur une même surface ou dans une même interface graphique.

Les gestes de l'utilisateur peuvent être quelconques dans leur forme, leur direction, leur vitesse, leur pression ou tout autre caractéristique d'un geste.

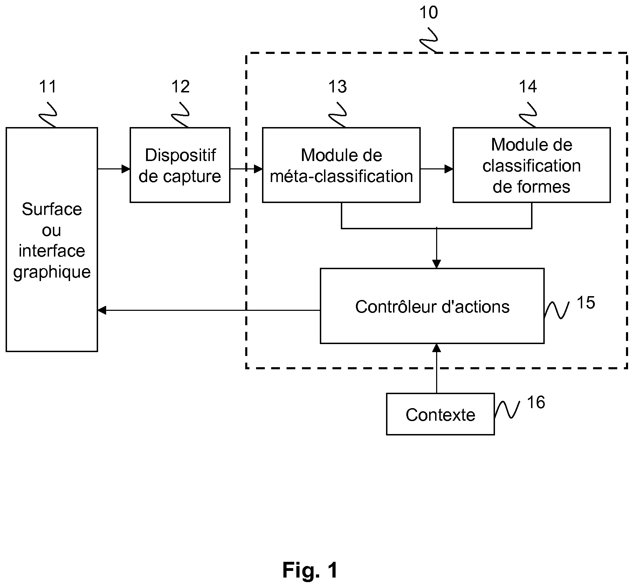

La **figure 1** représente un exemple d'un système 10 de classification de gestes selon l'invention.

Un utilisateur exécute un geste sur une surface ou dans une interface graphique 11. Ce geste est effectué avec un doigt, un stylet, etc... ou par l'intermédiaire d'un périphérique de pointage.

Un dispositif 12 de capture a pour rôle de capturer en temps réel le geste en cours d'exécution.

Le système 10 de classification de gestes comporte un module 13 de méta-classification.

Le module 13 de méta-classification a pour rôle d'analyser en temps réel la trajectoire du geste en cours d'exécution capturé par le dispositif 12 de capture. Cette analyse a pour objectif de déterminer à quelle classe de gestes synchrones ou de gestes asynchrones appartient le geste en cours d'exécution.

Pour cela, on définit différentes classes de gestes synchrones ou asynchrones correspondant, par exemple, à :
- un mouvement régulier prolongé (classe C₁),
- un mouvement rapide rectiligne (classe C₂),
- un mouvement de rotation vers la gauche (classe C₃),
- un mouvement de rotation vers la droite (classe C₄),
- un geste symbolique (classe C₅).

D'autres classes de gestes synchrones ou asynchrones peuvent également être définies, correspondant, par exemple, à un appui simple, un appui prolongé, un mouvement bref et court, etc. Ainsi, les exemples de classes qui précèdent sont donnés à titre illustratif et ne sont pas limitatifs de l'invention.

Dans la suite de la description, pour simplifier, on n'utilise que les classes C₁ à C₅.

Un geste symbolique est caractérisé par le fait qu'il possède une vitesse d'exécution initiale élevée, supérieure à un seuil prédéterminé, avec une accélération positive au départ. Un geste symbolique a également une forme présentant soit au moins une courbure (la lettre "S" possède deux courbures) soit au moins un angle (le signe "<" possède un angle, la lettre "W" possède trois angles).

La détection d'un angle repose sur une hypothèse selon laquelle, au passage d'un angle, la vitesse curviligne chute avant de croître à nouveau.

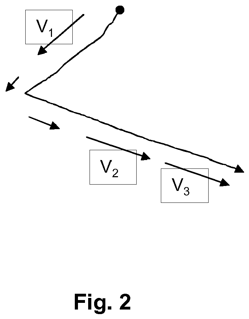

La **figure 2** illustre un exemple de détection d'un angle.

On mémorise, au fur et à mesure du geste, les vecteurs vitesse dont le module est supérieur à un certain seuil, soit, en référence à la figure 2, les vecteurs V₁, V₂, et V₃.

Au passage de l'angle, il existe donc 2 vecteurs consécutifs (V₁ et V₂) représentatifs de la direction du mouvement, avant et après l'angle. Il convient de calculer le produit scalaire entre les vecteurs consécutifs, normalisés, pour obtenir une mesure fiable de la variation angulaire, et de conclure sur l'absence ou la présence d'un angle.

Les classes C₁, C₃ et C₄ correspondent à des gestes synchrones. L'action qui résulte d'un geste appartenant à une de ces classe et appliqué à un objet, situé sur la surface ou dans l'interface graphique 11, est immédiatement ou quasi immédiatement visible.

Les classes C₂ et C₅ correspondent à des gestes asynchrones. Un ensemble de commandes est associé respectivement à la classe C₂ et à la classe C₅. Les commandes associées aux gestes de la classe C₂ correspondent, par exemple, aux flèches de déplacement d'un clavier de micro-ordinateur ou à l'envoi d'une succession de positions sur une surface ou dans une interface graphique. La classe C₅ correspond à des gestes symboliques. Les commandes associées aux gestes de la classe C₅ sont des commandes spécifiques et correspondent, par exemple, à des raccourcis clavier, à des commandes d'ouverture ou de fermeture d'une application, de sauvegarde, etc.

Le module 13 de méta-classification permet d'obtenir un ensemble de caractéristiques cinématiques (vitesse, accélération) et spatiales (position de début et de fin, positions successives, centre de la rotation, etc.) ainsi, éventuellement, que d'autres paramètres du geste comme la pression.

La détermination de la classe à laquelle appartient un geste en cours d'exécution, effectuée par le module 13 de méta-classification, repose sur les caractéristiques cinématiques et spatiales ainsi obtenues.

Pour les classes C₁ à C₅ identifiées, les principales caractéristiques cinématiques et spatiales des gestes correspondant à ces classes sont les suivantes :
- pour la classe C₁, c'est-à-dire correspondant à un mouvement régulier prolongé, les gestes sont lents (de vitesse faible, d'accélération faible devenant négative), de durée prolongée et de forme indéterminée,
- pour la classe C₂, c'est-à-dire correspondant à un mouvement rapide rectiligne, les gestes sont rapides (d'accélération forte), de durée brève et de forme quasi rectiligne,
- pour les classes C₃ ou C₄, c'est-à-dire correspondant à un mouvement de rotation vers la gauche ou vers la droite, les gestes sont plus ou moins courbes au départ avec une accélération faible ou forte, se transformant en une rotation assez rapide vers la gauche ou vers la droite, puis devenant éventuellement lents,
- pour la classe C₅, c'est-à-dire correspondant à un geste symbolique, les gestes sont rapides, en un seul trait, de durée brève et leur forme présente une ou plusieurs courbures ou encore un ou plusieurs angles.

Le module 13 de méta-classification détermine au plus tôt à quelle classe appartient le geste en cours. Cette contrainte est particulièrement forte lorsque le geste est synchrone et induit une action sur un objet situé sur la surface ou dans l'interface graphique. En effet, dans ce cas, il est indispensable que la classification du geste se fasse dans les plus brefs délais afin de garantir l'effet synchrone entre le mouvement du doigt, du stylet ou encore du périphérique de pointage et la modification visible de l'objet sur la surface ou dans l'interface graphique. C'est pour cela que le module 13 de méta-classification analyse le geste au fur et à mesure de son exécution sans attendre la fin de celle-ci.

En sortie du module 13 de méta-classification, on obtient donc une des 5 classes C₁ à C₅ précédemment identifiées à laquelle appartient le geste en cours d'exécution ainsi que des caractéristiques cinématiques et spatiales de ce geste.

En référence à la figure 1, le système 10 de classification de gestes comporte un module 14 de classification de formes.

Lorsqu'en sortie du module 13 de méta-classification on obtient la classe C₅, c'est-à-dire la classe d'un geste symbolique, la classe et la trajectoire du geste complet capturé sont transmises au module 14 de classification de formes.

Ce module 14 de classification de formes a pour rôle de reconnaître la trajectoire globale du geste dans un ensemble de trajectoires possibles appelées symboles et d'identifier le symbole associé au geste complet.

Dans un mode particulier de réalisation de l'invention, le module 14 de classification de formes est un algorithme de reconnaissance de formes qui s'appuie sur une approche HMM (pour *Hidden Markov Model* en anglais) et sur une représentation du geste utilisant un jeu de primitives graphiques. Cet algorithme fournit en sortie le symbole reconnu mais aussi un score de similarité associé à ce symbole.

En variante, le module 14 de classification de formes est un moteur de reconnaissance de formes pouvant mettre en oeuvre des techniques telles que des réseaux de neurones, de la logique floue, des réseaux bayésiens, etc.

Le système 10 de classification de gestes comporte un contrôleur d'actions 15.

Le contrôleur d'actions 15 a pour rôle d'associer et de faire exécuter une action appropriée au geste exécuté en fonction de règles prédéfinies.

Ces règles dépendent des données d'entrée du contrôleur d'actions 15 telles que la classe et les caractéristiques cinématiques et spatiales du geste provenant du module 13 de méta-classification ou telles que le symbole provenant du module 14 de classification de formes.

Ces règles dépendent également du contexte 16.

Le contexte 16 peut être de différents types comme par exemple : spatial, temporel, lié à l'application, lié à l'utilisateur, etc.

A titre d'exemple, dans le cas d'un geste synchrone, l'action peut consister, par exemple, à déplacer une image, à avoir un effet de grossissement continu (zoom positif) ou de diminution continue (zoom négatif) d'un objet (d'une image ou d'un document).

Toujours à titre d'exemple, dans le cas d'un geste asynchrone, la commande associée au geste peut correspondre à l'appui sur une touche de clavier standard comme, par exemple, une flèche de navigation, et l'action correspondante peut consister à naviguer dans une page web.

Dans le cas d'un geste symbolique, le contrôleur d'actions 15 effectue l'association entre le symbole reconnu et la commande spécifique correspondante qui peut impliquer une action consistant, par exemple, à aller sur une page web, à ouvrir une application, etc. Le contrôleur d'actions 15 peut également, le cas échéant, rejeter le geste. Ce cas peut notamment se présenter lorsque le score de similarité associé au symbole ne dépasse pas un seuil prédéterminé.

Dans un mode particulier de réalisation de l'invention, le module 13 de méta-classification est une machine à états de type automate à états finis.

Le comportement d'un automate à états finis est déterminé par le choix des états, de leurs connexions et par les conditions de transition, c'est-à-dire les conditions de passage d'un état à un autre.

Dans l'automate à états finis réalisant le module 13 de méta-classification de l'invention, un état caractérise une portion du geste en cours d'exécution à un instant donné.

Dans un mode particulier de réalisation de l'invention, les états suivants ont été définis :
- E₁ - prêt : le système est prêt et en attente d'un geste,
- E₂ - mouvement : le début d'un geste est détecté,
- E₃ - analyse : un geste est en cours d'analyse,
- E₄ - mouvement régulier : le geste est régulier (vitesse quasi uniforme),
- E₅ - mouvement rapide rectiligne : le geste est rapide et quasi rectiligne,
- E₆ - mouvement courbe rapide : le geste est courbe et rapide,
- E₇ - mouvement giratoire à gauche : le geste tourne vers la gauche,
- E₈ - mouvement giratoire à droite : le geste tourne vers la droite,
- E₉ - fin de geste : la fin du geste est détectée.

L'automate à états finis utilisé peut comporter plus ou moins d'états que ceux définis précédemment. Ainsi, les états ci-dessus sont donnés à titre illustratif et ne sont pas limitatifs de l'invention.

L'état E₃ (analyse) est un état transitoire qui traduit le fait que l'information disponible sur le geste en cours d'exécution à un instant donné n'est pas suffisante.

Le temps passé dans l'état E₃ (analyse) est donc variable.

Le comportement d'un automate à états finis est en partie déterminé par les connexions entre états. Tous les états ne sont pas connectés entre eux. Les connexions sont orientées d'un état vers un autre état.

Ainsi, par exemple, dans l'automate à états finis réalisant le module 13 de méta-classification de l'invention, l'état E₁ (prêt) et l'état E₆ (mouvement courbe régulier) ne sont pas connectés. L'état E₉ (fin de geste) est connecté à l'état E₁ (prêt) mais la connexion inverse n'est pas valide.

L'ensemble des états et des connexions entre états définit la topologie de l'automate à états finis.

L'analyse de la trajectoire d'un geste correspond à une suite d'états. La suite d'états détermine la classe obtenue en sortie du module 13 de méta-classification.

Une suite d'états commence par un état dit "état prêt" et se termine par un état "fin de geste".

Le passage d'un état à un autre état a lieu lorsqu'il existe une connexion entre ces deux états et qu'elle est orientée dans le sens du passage.

Le passage d'un état à un autre état se fait selon une condition dite condition de transition tₙ, avec n variant de 1 à N, N étant le nombre total de transitions.

Une condition de transition dépend des caractéristiques cinématiques et spatiales du geste considéré.

La classe affectée en sortie du module 13 de méta-classification peut, éventuellement, être modifiée à plusieurs reprises au cours de l'exécution du geste, selon l'évolution de la suite d'états. Ces modifications en sortie dépendent de la suite d'états, c'est-à-dire des états successivement activés, et des règles de classification appliquées. Le contrôleur d'actions 15 prend en compte ces modifications en appliquant ses propres règles.

A titre d'exemples non limitatifs de l'invention, voici quelques règles de classification appliquées par l'automate à états :
- la classe C₁ est affectée à la sortie du module 13 de méta-classification dès que celui-ci passe dans l'état E₄ (mouvement régulier),
- la classe C₂ est affectée à la sortie du module 13 de méta-classification seulement dans l'état E₉ (fin de geste) et lorsque la suite d'états correspond à une accélération forte du geste sans courbure (exemple : E₁ → E₂ → E₅ → E₉) ou à une augmentation régulière de la vitesse du geste sans courbure (exemple : E₁ → E₂ → E₃ → E₅ → E₉),
- les classes C₃ et C₄ sont affectées à la sortie du module 13 de méta-classification lorsque, par exemple, il y a succession du passage à l'état E₆ (mouvement courbe rapide) et du passage à l'état E₇ (mouvement giratoire à gauche) pour la classe C₃ ou du passage à l'état E₈ (mouvement giratoire à droite) pour la classe C₄,
- la classe C₅ est affectée à la sortie du module 13 de méta-classification seulement dans l'état E₉ (fin de geste) et lorsque, par exemple, il y a un passage (éventuellement répété) de l'état E₅ (mouvement rapide rectiligne) à l'état E₆ (mouvement courbe rapide).

Lorsque le geste est synchrone, une classe est affectée à la sortie dès les premiers changements d'états de l'automate. Cela concerne les classes C₁, C₃ et C₄, relatives aux mouvements réguliers ou de rotation.

Dans le cas des gestes asynchrones, une classe est affectée à la sortie lorsque l'automate est dans l'état "fin de geste". Cela concerne les classes C₂ et C₅. Si le geste est un geste symbolique, c'est-à-dire appartenant à la classe C₅, alors le module 14 de classification de formes est sollicité pour reconnaître la trajectoire du geste et lui associer un symbole.

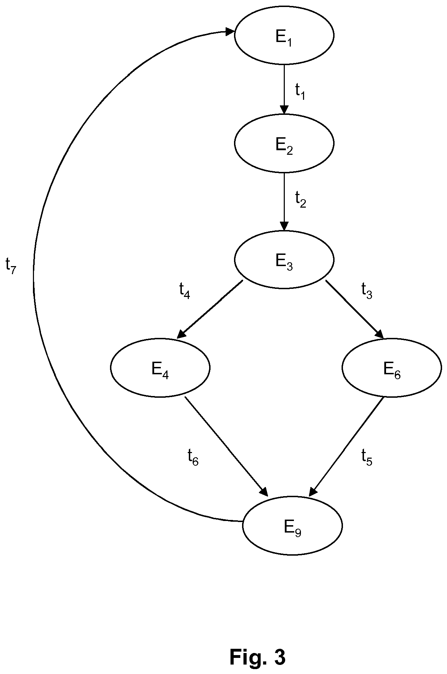

La **figure** 3 illustre deux exemples de classification de gestes par le module (13) de méta-classification.

En référence à la figure 3, les ovales représentent les états utilisés pour ces deux exemples à savoir E₁ (prêt), E₂ (mouvement), E₃ (analyse), E₄ (mouvement régulier), E₆ (mouvement courbe rapide) et E₉ (fin de geste).

Les flèches représentent les connexions entre ces états.

Les expressions tᵢ, avec i variant de 1 à 7, représentent les conditions de transition à satisfaire pour passer d'un état à un autre.

Une transition tᵢ, avec i variant de 1 à 7, est égale à 1 si les conditions de passage de l'état précédent à l'état suivant sont satisfaites, à 0 sinon.

En référence à la figure 3, la condition de transition t₁ correspond à la détection d'un mouvement. Il y a mouvement lorsque la vitesse curviligne instantanée (Vᵢₙₛₜ) est supérieure à un certain seuil (SH₀), soit Vᵢₙₛₜ > SH₀.

Si ce critère est vérifié, alors t₁ = 1 et l'automate passe dans l'état E₂ (mouvement).

A partir de ce moment là, si l'information disponible sur le mouvement en cours d'exécution n'est pas suffisante et si aucune autre condition de transition (ces transitions n'étant pas représentées sur la figure 3) n'est satisfaite alors la condition de transition t₂ est satisfaite (t₂ = 1) et l'automate passe dans l'état transitoire E₃ (analyse).

La condition de transition t₃ est satisfaite si un geste rapide et courbe est détecté. La détection d'un geste courbe est effectuée à partir de l'analyse de la vitesse tangentielle instantanée. Si t₃ = 1 alors l'automate passe dans l'état E₆ (mouvement courbe rapide). Un geste rapide et courbe correspond à un geste asynchrone et plus particulièrement à un geste symbolique. L'automate peut rester dans l'état E₆ (mouvement courbe rapide) tant qu'aucune autre condition de transition n'est satisfaite, en particulier, tant que la condition de transition t₅ n'est pas satisfaite.

La condition de transition t₄ est satisfaite si un geste lent et régulier est détecté. Pour cela, il est nécessaire que la condition de transition t₃ ne soit pas satisfaite ainsi qu'aucune autre condition de transition et que l'accélération moyenne curviligne γ_{moy} soit négative, c'est-à-dire γ_{moy} < 0. En effet, on considère que dans le cas d'un mouvement lent et régulier la vitesse curviligne du geste fluctue autour d'une valeur moyenne ce qui fait que l'accélération change de signe au cours du temps (positive au départ puis négative).

Si la condition de transition t₄ est satisfaite alors l'automate passe dans l'état E₄ (mouvement régulier). Un geste régulier correspond à un geste synchrone.

Si la condition de transition t₅ ou t₆ est satisfaite alors l'automate passe dans l'état E₉ (fin de geste). Le passage à l'état E₉ (fin de geste), repose, par exemple, sur un des critères suivants : un lever de stylet ou de doigt ou une vitesse moyenne nulle ou très faible ou encore un relâché d'un bouton de périphérique de pointage.

La condition de transition t₇ étant toujours satisfaite, l'automate revient dans son état initial, à savoir E₁ (prêt).

La suite d'états E₁ → E₂ → E₃ → E₄ permet d'analyser la trajectoire du geste et de déterminer que celui-ci correspond à un mouvement régulier prolongé. Dans ce cas, il n'est pas nécessaire d'attendre le passage à l'état E₉ (fin de geste) pour déterminer la classe du geste. Par conséquent, on obtient la classe C₁ en sortie du module 13 de méta-classification.

La suite d'états E₁ → E₂ → E₃ → E₆ → E₉ permet de déterminer que le geste exécuté correspond à un geste symbolique. Par conséquent, on obtient la classe C₅ en sortie du module 13 de méta-classification.

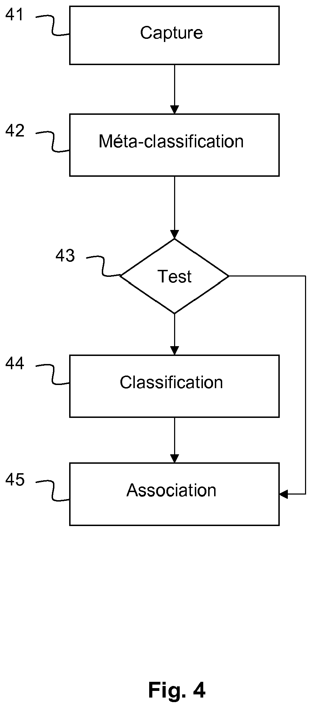

La **figure 4** représente un exemple de procédé de classification de gestes selon l'invention.

Le procédé de classification de gestes selon l'invention comporte une étape 41 de capture en temps réel d'un geste exécuté par un utilisateur sur une surface ou dans une interface graphique.

La capture du geste en cours d'exécution est réalisée par le dispositif 12 de capture.

L'étape suivante 42 est une étape de méta-classification. Au cours de cette étape 42, on analyse en temps réel la trajectoire, donnée par des caractéristiques cinématiques et spatiales, du geste en cours d'exécution capturé à l'étape précédente et on détermine à quelle classe de gestes synchrones ou de gestes asynchrones appartient le geste en cours d'exécution.

L'étape 42 est réalisée par le module 13 de méta-classification décrit ci-dessus.

L'étape suivante 43 est un test de la nature de la classe déterminée à l'étape 42.

Si la classe déterminée à l'étape 42 correspond à un geste symbolique alors la reconnaissance de la trajectoire du geste complet capturé est réalisée au cours de l'étape 44, étape de classification de forme. Il s'agit d'identifier le symbole associé au geste complet dans un ensemble de symboles, un symbole correspondant à une trajectoire possible.

L'étape 44 est réalisée par le module 14 de classifications de formes.

L'étape suivante 45 d'association d'action est réalisée par le contrôleur d'actions 15 décrit ci-dessus. Au cours de l'étape 45, une action à exécuter est associée à la classe ou au symbole obtenu respectivement à l'issue de l'étape 42 ou de l'étape 44.

Cette action est réalisée en réponse au geste exécuté par l'utilisateur.

L'invention concerne également un programme d'ordinateur pour un système de classification de gestes comprenant des instructions logicielles pour faire exécuter, par le système, le procédé précédemment décrit. Le programme d'ordinateur peut être stocké dans ou transmis par un support de données. Celui-ci peut être un support matériel de stockage, par exemple un CD-ROM, une disquette magnétique ou un disque dur, ou bien un support transmissible tel qu'un signal électrique, optique ou radio.

Le système 10 de classification de gestes peut être intégré dans un terminal tel qu'une tablette mobile, un PDA (pour *Personal Digital Assitant* en anglais), un terminal mobile, un micro-ordinateur, ou encore dans tout terminal mettant en oeuvre des interactions gestuelles entre un utilisateur et une surface ou une interface graphique de ce terminal.

## Revendications

1. Système de classification de gestes exécutés par un utilisateur sur une surface sensible au toucher avec un doigt ou un stylet, ou dans une interface graphique par l'intermédiaire d'un périphérique de pointage, comportant un module (13) de méta-classification apte à analyser des caractéristiques spatiales d'un geste quelconque en cours d'exécution, et à déterminer en fonction desdites caractéristiques à quelle classe de gestes synchrones ou de gestes asynchrones appartient ce geste, et un module (14) de classification de formes apte, lorsqu'en sortie du module de méta-classification (13) la classe d'un geste asynchrone et symbolique a été déterminée, à associer un symbole au geste, lequel symbole correspond à une commande à exécuter sur la surface ou dans l'interface graphique,
**caractérisé en ce que** le module de méta-classification est en outre apte à analyser des caractéristiques cinématiques comprenant au moins une vitesse et une accélération, un geste asynchrone et symbolique comprenant au moins une vitesse initiale supérieure à un seuil prédéterminé et une accélération positive au départ, ledit module de méta-classification étant un automate à états finis, un état correspondant à une portion du geste en cours d'exécution à un instant donné, les états étant définis de la manière suivante :
- un état E1 dans lequel le module de méta-classification est prêt et en attente d'un geste,
- un état E2 dans lequel le début d'un geste est détecté,
- un état E3 dans lequel le geste est en cours d'analyse,
- au moins un état (E4, E5, E6, E7, E8) défini par les caractéristiques cinématiques et spatiales du geste en cours et correspondant à une portion du geste en cours d'exécution à un instant donné,
- un état E9 dans lequel la fin du geste est détecté.

2. Système selon la revendication 1, **caractérisé en ce que** le module (13) de méta-classification détermine l'appartenance dudit geste à une classe de gestes de manipulation directe synchrones s'il présente des caractéristiques cinématiques de vitesse prédéterminée et d'accélération devenant négative.

3. Système selon la revendication 1, **caractérisé en ce qu'**un geste symbolique comporte en outre au moins une courbure ou au moins un angle.

4. Système selon la revendication 1, **caractérisé en ce que** l'automate à états finis comporte un état transitoire correspondant à une information insuffisante sur le geste en cours d'exécution.

5. Procédé de classification de gestes exécutés par un utilisateur sur une surface sensible au toucher avec un doigt ou un stylet, ou dans une interface graphique par l'intermédiaire d'un périphérique de pointage, comprenant une étape (42) de méta-classification comportant l'analyse de caractéristiques spatiales d'un geste quelconque en cours d'exécution, une étape de décision en cours d'exécution d'affectation à ce geste d'une classe de gestes synchrones ou asynchrones, en fonction desdites caractéristiques, et une étape de classification de formes apte, lorsque la classe d'un geste symbolique et asynchrone a été déterminée, à associer un symbole au geste dit symbolique et asynchrone, lequel symbole correspond à une commande à exécuter sur la surface ou dans l'interface graphique,
**caractérisé en ce que** l'étape de méta-classification analyse en outre des caractéristiques cinématiques comprenant au moins une vitesse et une accélération, un geste asynchrone et symbolique comprenant au moins une vitesse initiale supérieure à un seuil prédéterminé et une accélération positive au départ,
et **en ce que** l'étape de méta-classification analyse les états d'un module de méta-classification qui est un automate à états finis, un état correspondant à une portion du geste en cours d'exécution à un instant donné, les états étant définis de la manière suivante :
- un état E1 dans lequel le module de méta-classification est prêt et en attente d'un geste,
- un état E2 dans lequel le début d'un geste est détecté,
- un état E3 dans lequel le geste est en cours d'analyse,
- au moins un état (E4, E5, E6, E7, E8) défini par les caractéristiques cinématiques et spatiales du geste en cours et correspondant à une portion du geste en cours d'exécution à un instant donné,
- un état E9 dans lequel la fin du geste est détecté.

6. Produit programme d'ordinateur comportant des instructions de programme pour l'exécution du procédé de classification de gestes, selon la revendication 5.

7. Terminal comportant un système de classification de gestes selon la revendication 1.

## Patentansprüche

1. System zum Klassifizieren von Gesten, die von einem Anwender auf einer berührungsempfindlichen Oberfläche mit einem Finger oder einem Eingabestift oder in einer graphischen Schnittstelle über ein Zeige-Peripheriegerät ausgeführt werden, das Folgendes umfasst: ein Metaklassifizierungsmodul (13), das räumliche Eigenschaften einer beliebigen aktuell ausgeführten Geste analysieren kann und als Funktion der Eigenschaften bestimmen kann, zu welcher Klasse synchroner Gesten oder asynchroner Gesten diese Geste gehört, und ein Formenklassifizierungsmodul (14), das dann, wenn am Ausgang des Metaklassifizierungsmoduls (13) die Klasse einer asynchronen und symbolischen Geste bestimmt worden ist, der Geste ein Symbol zuordnen kann, wobei das Symbol einem auf der Oberfläche oder in der graphischen Schnittstelle auszuführenden Befehl entspricht,
**dadurch gekennzeichnet, dass** das Metaklassifizierungsmodul außerdem kinematische Eigenschaften, die wenigstens eine Geschwindigkeit und eine Beschleunigung umfassen, und eine asynchrone und symbolische Geste, die wenigstens eine Anfangsgeschwindigkeit, die größer als ein vorgegebener Schwellenwert ist, und eine anfänglich positive Beschleunigung umfasst, analysieren kann, wobei das Metaklassifizierungsmodul ein Automat mit endlichen Zuständen ist, wobei ein Zustand einem Abschnitt der Geste während der Ausführung zu einem gegebenen Zeitpunkt entspricht, wobei die Zustände auf die folgende Weise definiert sind:
- ein Zustand E1, in dem das Metaklassifizierungsmodul bereit ist und auf eine Geste wartet,
- ein Zustand E2, in dem der Beginn einer Geste detektiert wird,
- ein Zustand E3, in dem die Geste aktuell analysiert wird,
- wenigstens ein Zustand (E4, E5, E6, E7, E8), der durch die kinematischen und räumlichen Eigenschaften der aktuellen Geste definiert ist und einem Abschnitt der aktuell ausgeführten Geste zu einem gegebenen Zeitpunkt entspricht,
- ein Zustand E9, in dem das Ende der Geste detektiert wird.

2. System nach Anspruch 1, **dadurch gekennzeichnet, dass** das Metaklassifizierungsmodul (13) die Zugehörigkeit der Geste zu einer Klasse von synchronen Gesten einer direkten Manipulation bestimmt, falls sie kinematische Eigenschaften einer vorgegebenen Geschwindigkeit und einer negativ werdenden Beschleunigung aufweist.

3. System nach Anspruch 1, **dadurch gekennzeichnet, dass** eine symbolische Geste außerdem wenigstens eine Krümmung oder wenigstens einen Winkel umfasst.

4. System nach Anspruch 1, **dadurch gekennzeichnet, dass** der Automat mit endlichen Zuständen einen Übergangszustand enthält, der unzureichenden Informationen über die aktuell ausgeführte Geste entspricht.

5. Verfahren zum Klassifizieren von Gesten, die von einem Anwender auf einer berührungsempfindlichen Oberfläche mit einem Finger oder einem Eingabestift oder in einer graphischen Schnittstelle über ein Zeige-Peripheriegerät ausgeführt werden, das Folgendes umfasst: einen Metaklassifizierungsschritt (42), der das Analysieren von räumlichen Eigenschaften einer beliebigen aktuell ausgeführten Geste enthält, einen Schritt des Entscheidens während der Ausführung der Zuordnung dieser Geste zu einer Klasse synchroner oder asynchroner Gesten als Funktion der Eigenschaften und einen Formklassifizierungsschritt, der dann, wenn die Klasse einer symbolischen und asynchronen Geste bestimmt worden ist, der symbolischen und asynchronen Geste ein Symbol zuordnen kann, umfasst, wobei das Symbol einem auf der Oberfläche oder in der graphischen Schnittstelle auszuführenden Befehl entspricht,
**dadurch gekennzeichnet, dass** der Metaklassifizierungsschritt außerdem kinematische Eigenschaften, die wenigstens eine Geschwindigkeit und eine Beschleunigung umfassen, und eine asynchrone und symbolische Geste, die wenigstens eine Anfangsgeschwindigkeit, die größer als ein vorgegebener Schwellenwert ist, und eine am Beginn positive Beschleunigung umfasst, analysiert,
und dass der Metaklassifizierungsschritt die Zustände eines Metaklassifizierungsmoduls, das ein Automat mit endlichen Zuständen ist, analysiert, wobei ein Zustand einem Abschnitt der aktuell ausgeführten Geste zu einem gegebenen Zeitpunkt entspricht, wobei die Zustände auf die folgende Weise definiert sind:
- ein Zustand E1, in dem das Metaklassifizierungsmodul bereit ist und auf eine Geste wartet,
- ein Zustand E2, in dem der Beginn einer Geste detektiert wird,
- ein Zustand E3, in dem die Geste aktuell analysiert wird,
- wenigstens ein Zustand (E4, E5, E6, E7, E8), der durch die kinematischen und räumlichen Eigenschaften der aktuellen Geste definiert ist und einem Abschnitt der aktuell ausgeführten Geste zu einem gegebenen Zeitpunkt entspricht,
- ein Zustand E9, in dem das Ende der Geste detektiert wird.

6. Computerprogrammprodukt, das Programmbefehle für die Ausführung des Verfahrens zum Klassifizieren von Gesten nach Anspruch 5 enthält.

7. Endgerät, das ein System zum Klassifizieren von Gesten nach Anspruch 1 enthält.

## Claims

1. System for classifying gestures executed by a user on a touch-sensitive surface with a finger or a stylus, or in a graphical interface by way of a pointing peripheral, comprising a meta-classification module (13) able to analyse spatial characteristics of any gesture undergoing execution, and to determine as a function of said characteristics the class of synchronous gestures or of asynchronous gestures to which this gesture belongs, and a shape classification module (14) able, when on output from the meta-classification module (13) the class of an asynchronous and symbolic gesture has been determined, to associate a symbol with the gesture, which symbol corresponds to a command to be executed on the surface or in the graphical interface, **characterized in that** the meta-classification module is moreover able to analyse kinematic characteristics comprising at least a speed and an acceleration, an asynchronous and symbolic gesture comprising at least one initial speed above a predetermined threshold and a positive acceleration on departure, said meta-classification module being a finite state automaton, a state corresponding to a portion of the gesture undergoing execution at a given instant, the states being defined in the following manner:
- a state E1 in which the meta-classification module is ready and waiting for a gesture,
- a state E2 in which the start of a gesture is detected,
- a state E3 in which the gesture is undergoing analysis,
- at least one state (E4, E5, E6, E7, E8) defined by the kinematic and spatial characteristics of the gesture in progress and corresponding to a portion of the gesture undergoing execution at a given instant,
- a state E9 in which the end of the gesture is detected.

2. System according to Claim 1, **characterized in that** the meta-classification module (13) determines that said gesture belongs to a class of synchronous direct-manipulation gestures if it exhibits kinematic characteristics of a predetermined speed and of acceleration becoming negative.

3. System according to Claim 1, **characterized in that** a symbolic gesture furthermore comprises at least one curvature or at least one angle.

4. System according to Claim 1, **characterized in that** a finite state automaton comprises a transient state corresponding to insufficient information on the gesture undergoing execution.

5. Method of classifying gestures executed by a user on a touch-sensitive surface or a finger or a stylus, or in a graphical interface by way of a pointing peripheral, comprising a meta-classification step (42) comprising the analysis of spatial characteristics of any gesture undergoing execution, a decision step in the course of execution of assigning this gesture a class of synchronous or asynchronous gestures, as a function of said characteristics, and a shape classification step able, when the class of a symbolic and asynchronous gesture has been determined, to associate a symbol with a so-called symbolic and synchronous gesture, which symbol corresponds to a command to be executed on the surface or in the graphical interface, **characterized in that** the meta-classification step analyses furthermore kinematic characteristics comprising at least one speed and one acceleration, an asynchronous and symbolic gesture comprising at least one initial speed above a predetermined threshold and a positive acceleration on departure,
and **in that** a meta-classification step analyses the states of a meta-classification module which is a finite state automaton, a state corresponding to a portion of the gesture undergoing execution at a given instant, the states being defined in the following manner:
- a state E1 in which the meta-classification module is ready and waiting for a gesture,
- a state E2 in which the start of a gesture is detected,
- a state E3 in which the gesture is undergoing analysis,
- at least one state (E4, E5, E6, E7, E8) defined by the kinematic and spatial characteristics of the gesture in progress and corresponding to a portion of the gesture undergoing execution at a given instant,
- a state E9 in which the end of the gesture is detected.

6. Computer program product comprising program instructions for the execution of the method of classifying gestures, according to Claim 5.

7. Terminal comprising a system for classifying gestures according to Claim 1.
